# EUROPÄISCHE PATENTANMELDUNG

(11) **EP 0 857 619 A1**
(43) Veröffentlichungstag der Anmeldung: **12.08.1998**
(21) Anmeldenummer: 97122971.1
(22) Anmeldetag: 30.12.1997
(51) Int. Cl.: B60R 19/40

(54) **Vorrichtung zur Energieaufnahme**

(30) Priorität: 05.02.1997 DE 29701947 U
(71) Anmelder: REHAU AG + Co, 95111 Rehau (DE)
(72) Erfinder: Brun, Uwe, D-95111 Rehau (DE); Röder, Bernd, D-95111 Rehau (DE)

(57) **Zusammenfassung**

Die Erfindung betrifft eine Vorrichtung zur Energieaufnahme bei Stoßfängern von Kraftfahrzeugen, wobei hinter der Stoßfängerverkleidung (1) ein an die freien Enden der Längsträger (7) angeschlossener Querträger (4) montiert ist. Weitere Versteifungs- oder Montageteile (3, 5) sind mit dem Querträger (4) verbindbar. Die Erfindung wird darin gesehen, daß dem ersten Querträger (4) ein zweiter Querträger (9) zugeordnet ist, welcher mit einer in den Längsträgern (7) axial verschieblichen Ausfahreinheit (10) verbunden ist. Die Ausfahreinheit (10) ist über eine an sich bekannte Sensorik, welche ein Hindernis rechtzeitig vor einem Zusammenstoß erkennt, gesteuert.

## Beschreibung

Die Erfindung betrifft eine Vorrichtung zur Energieaufnahme bei Stoßfängern von Kraftfahrzeugen, wobei hinter der Stoßfängerverkleidung ein an die freien Enden der Längsträger angeschlossener Querträger montiert ist und wobei weitere Versteifungs- oder Montageteile mit dem Querträger verbindbar sind.

Pkw-Stoßfänger haben bei Stößen mit geringer Aufprallgeschwindigkeit die Aufgabe, eine möglichst große Energiemenge aufzunehmen, um die Beschädigung anderer Bauteile des Fahrzeugs zu minimieren. Dabei ist der Betrag der aufgenommenen Energie abhängig von den während des Stoßes wirkenden Kräften und der Verformbarkeit des Stoßfängers. Die Stoßfänger werden im allgemeinen so ausgelegt, daß ein bestimmtes Kraftniveau nicht überschritten wird, damit die Fahrzeugbauteile, an denen sich das Stoßfängersystem abstützt, schadenfrei bleiben. Der Zulässige Verformungsweg oder der Stoßfängerüberhang, der als Abstand zwischen vorderer Stoßfängerkante und der vorderen Kante angrenzender Bauteile wie Scheinwerfer oder Motorhaube gemessen wird, ist durch das Styling begrenzt. Diese Begrenzung führt in der Praxis dazu, daß nur die bei niedrigen Aufprallgeschwindigkeiten bis ca. 8 km/h auftretenden Stoßenergien vollständig vom Stoßfängersystem aufgenommen werden, während die bei höheren Aufprallgeschwindigkeiten resultierenden Energien größere Verformungswege und damit eine Beschädigung der angrenzenden Bauteile bewirken.

Aus der DE 27 08 856 C2 ist eine gattungsgemäße Vorrichtung zur Energieaufnahme bei Stoßfängem von Kraftfahrzeugen bekannt. Diese Vorrichtung besteht aus einem abdeckenden Verkleidungselement und einem mit diesem verbindbaren Basisteil. Das Basisteil stützt sich am Querträger des Kraftfahrzeugs ab und besitzt in Richtung auf das Verkleidungselement aufragende Aussteifungen.

Der durch die Verbindung des Verkleidungselementes mit dem Basisteil hergestellte Stoßfänger besitzt eine ausreichende Steifigkeit und Reversibilität bei leichten Verformungen wie Parkstößen, bei denen Geschwindigkeiten zwischen 3 und 4 km/h angesetzt werden. Größere Kräfte vermag ein Aufbau dieser Art jedoch nicht aufzunehmen.

Aus der EU 0 337 119 B1 ist ein weiterer energieaufnehmender Stoßfänger aus polymerem Werkstoff bekannt, der aus einem sich über die Fahrzeugbreite erstreckenden, geschlossenen Hohlprofil besteht. Die Rückwand dieses Hohlprofils besitzt mindestens zwei übereinanderliegende, horizontale Reihen von mit Abstand zueinander angeordneten, sich zu der Vorderwand hin erstreckenden Eindrückungen. Diese Eindrückungen sind im Bereich ihrer Stimwände mit der Vorderwand des Hohlprofils verbunden. Die Rückwand ist jeweils zwischen zwei übereinanderliegenden Reihen von Eindrückungen zu einem in Fahrzeugquerrichtung horizontal durchlaufenden Zwischensteg ausgeformt. Diese Anordnung der Zwischenstege und die stirnseitig mit der Vorderwand verbundenen Eindrückungen bewirken eine Kombination hoher Steifigkeit, geringer Durchbiegung, hoher Energieabsorption und günstigem Gewicht des auf diese Weise hergestellten energieaufnehmenden Stoßfängers. Der Verformungsweg dieses Stoßfängers ist jedoch ähnlich gering wie der des vorstehend zum Stand der Technik geschilderten Stoßfängersystems.

Neuerdings werden in Stoßfängersystemen auch Pralltöpfe aus Kunststoff zur Energieabsorption bei kleineren Stößen eingesetzt. Diese Pralltöpfe sind hinter der Verkleidung der Stoßfänger angeordnet und stützen sich in der Regel am Querträger des Kraftfahrzeugs ab. Hierbei sind die beiden den Bauraum der Pralltöpfe beschreibenden Grenzflächen 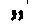 Querträger und Stoßfängerverkleidung" weitestgehend planar und stets geschlossen. Die Pralltöpfe können dabei sowohl mit der offenen Seite als auch mit ihrer geschlossenen Seite zum Querträger hin angeordnet sein. Beim Einbringen von Stoßenergie werden die Pralltöpfe zwischen den beiden Grenzflächen 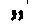 Querträger und Stoßfängerverkleidung" gestaucht. Hierbei muß über die Pralltöpfe eine möglichst hohe Energiemenge aufgenommen werden, um eine Beschädigung der angrenzenden Bauteile zu vermeiden.

Eine weitere Forderung ist es, daß die sich während des Angriffs der Stoßenergie verformenden Pralltöpfe nach dem Stoß vollständig in ihre Ausgangsform zurückstellen müssen. Diese Forderungen werden von den bekannten Pralltöpfen in nicht ausreichendem Maße erfüllt. Auch mit diesen Prallelementen lassen sich Stoßenergien nur bei relativ niedrigen Aufprallgeschwindigkeiten bis max. 8 km/h auffangen.

Da die Forderung des Marktes jedoch dahin geht, Aufprallenergien von 15 km/h und mehr ausschließlich über das Stoßfängersystem aufzunehmen, bevor eine Beschädigung der angrenzenden Bauteile eintritt, sind alle bekannten Stoßfängersysteme nicht geeignet, diese Anforderung zu erfüllen. Hier setzt die Erfindung ein, die sich zur Aufgabe gestellt hat, ein Stoßfängersystem anzugeben, mit dem bei entsprechender Dimensionierung Stoßenergien bei Aufprallgeschwindigkeiten gleich oder größer 15 km/h absorbiert werden können. Erfindungsgemäß wird dazu vorgeschlagen, daß dem Querträger ein zweiter Querträger zugeordnet ist, welcher mit einer in den Längsträgern axial verschieblichen Ausfahreinheit verbunden ist, und daß die Ausfahreinheit über eine an sich bekannte Sensorik, welche ein Hindernis rechtzeitig vor einem Zusammenstoß erkennt, gesteuert ist.

Mit diesem Aufbau lassen sich die scheinbar unvereinbaren Forderungen nach hoher Energieaufnahme, geringem Überhang und minimalern Schaden weitgehend erfüllen. Das erfindungsgemäße Stoßfängersystem ist ein modulares System, bei dem das ausfahrbare System auf dem nicht ausfahrbaren System aufbaut. Hierbei werden für das ausfahrbare System weitgehend die Bauelemente des nicht ausfahrbaren Systems übernommen und spezielle Elemente wie Sensorik und Ausfahrmechanismus hinzugefügt.

Wesentliches Merkmal der Erfindung ist die Tatsache, daß einzelne Teile des Stoßfängers aus der durch das Styling vorgegebene Position ausfahrbar sind. Hierbei überwacht eine 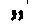 intelligente" Sensorik die Fahrzeugumgebung, erkennt auftretende Hindernisse und gibt vor einem Zusammenstoß das Signal zum Ausfahren. Durch den damit vergrößerten Überhang hat der erfindungsgemäße Stoßfänger ein größeres Potential zur Energieaufnahme und die angrenzenden Bauteile werden auch bei höheren Geschwindigkeiten geschützt.

Es erscheint im Rahmen der Erfindung vorteilhaft, daß der erste Querträger ein U-förmiges, nach vorn offenes Querschnittsprofil aufweist. Dadurch kann der zweite Querträger, der im Querschnitt kleiner gehalten ist als der Aufnahmeraum des U-förmigen ersten Querträgers, in vollem Umfang in diesem Aufnahmeraum eingebaut werden. Der erste Querträger kann aber auch ein flachgestaltetes Trägerelement sein, dem der zweite Querträger vorgelagert ist, welcher dann durch die Stoßfängerabdeckung abgedeckt ist.

Der zweite Querträger ist vorteilhaft ein hohes Bauelement, da mit solchen Bauteilen eine optimale Energieaufnahme erzielbar ist. Im Bedarfsfall kann der zweite Querträger jedoch auch ein nach hinten oder nach vorne offenes U-Profil oder ein energieaufnehmendes Bauteil beliebiger Raumform sein.

Das erfindungsgemäße Stoßfängersystem ermöglicht mit seinem im Bedarfsfall verlängerbaren Verformungsweg eine erheblich größere Energieaufnahme bei Aufprallstößen von Kraftfahrzeugen, als sie mit den Stoßfängersystemen des bekannten Standes der Technik erzielbar sind. So sind im Versuchswege Stoßenergien bei Aufprallgeschwindigkeiten von über 15 km/h absorbiert worden, ohne daß eine Beschädigung der angrenzenden Bauteile des Fahrzeuges aufgetreten wäre.

In der Zeichnung sind Ausführungsbeispiele des erfindungsgemäßen Stoßfängersystems schematisch dargestellt; es zeigt:
Fig. 1 den Grundaufbau eines Stoßfängersystems vor dem Einbau des ausfahrbaren Bauteils.
Fig. 2 das Stoßfängersystem gemäß Fig. 1 mit eingebautem ausfahrbaren Bauteil.
Fig. 3 das Stoßfängersystem gemäß Fig. 2 mit aktiviertem ausfahrbaren Bauteil.
Fig. 4 das Stoßfängersystem gemäß Fig. 2 mit anderer Gestaltung des ersten Querträgers.
Fig. 5 das Stoßfängersystem gemäß Fig. 2 mit einer weiteren Gestaltung des ersten Querträgers.

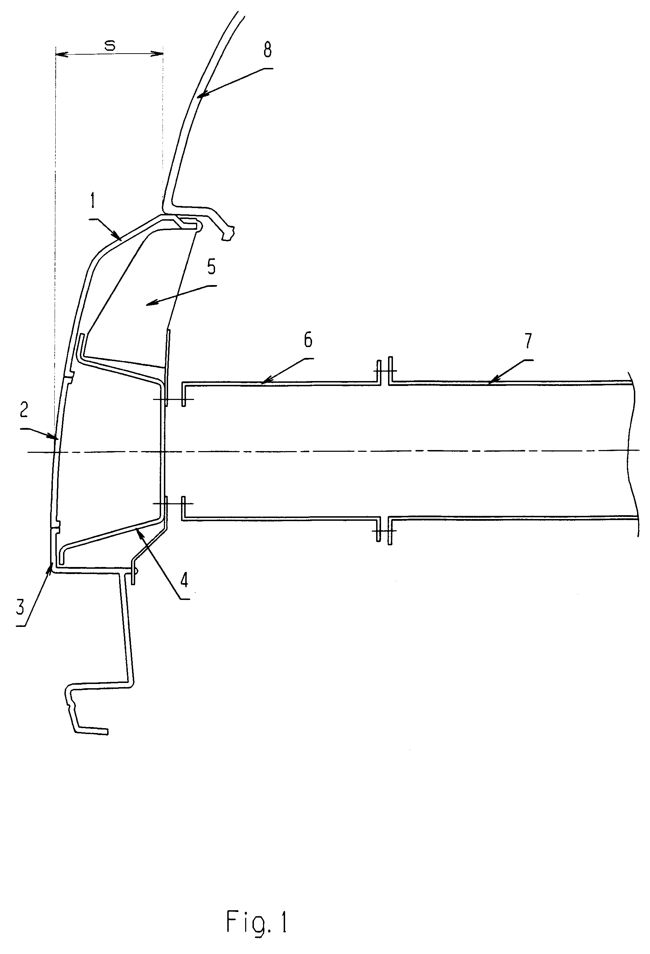

Das in Fig. 1 gezeigte Stoßfängersystem erstreckt sich mit seinem Grundaufbau über die gesamte Fahrzeugbreite und ist an den Längsträgem 7 der Fahrzeugkarosserie befestigt. Fig. 1 zeigt dabei einen Schnitt in einem der Befestigungsbereiche. Das Stoßfängersystem besteht aus der Stoßfängerabdeckung 1, der Schutzleiste 2, dem Spoiler 3, dem Querträger 4 und dem inneren Versteifungsteil 5. Dieses durch die Einzelteile gebildete Gesamtsystem ist über den Abstandhalter 6 am Langsträger 7 der Fahrzeugkarosserie montiert. Der Abstandhalter 6 kann dabei auch als Kraftbegrenzungselement ausgeführt sein. Dieser Grundaufbau verformt sich entsprechend der auftreffenden Stoßenergie. Ist diese Verformung größer als der Überhang s, werden die angrenzenden Bauteile 8 beschädigt.

Ein besonders zu beachtendes Bauelement ist bei diesem Aufbau der Querträger 4. Dieser Querträger 4 hat einerseits die Aufgabe, durch Verformung Stoßenergie aufzunehmen, andererseits stabilisiert er das Gesamtsystem und dient zur Befestigung von innerem Versteifungsteil 5, Spoiler 3 usw. Sinnvoll ist es dabei, daß der Querträger 4 vom Fahrzeug aus gesehen nach vorn offen ist, um den erfindungsgemäßen zweiten Querträger aufnehmen zu können.

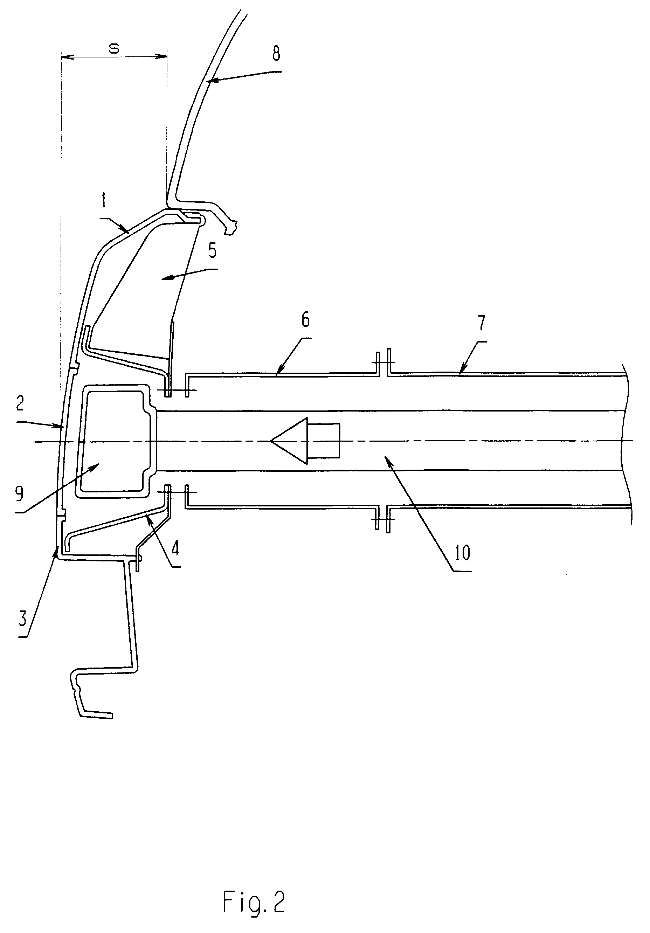

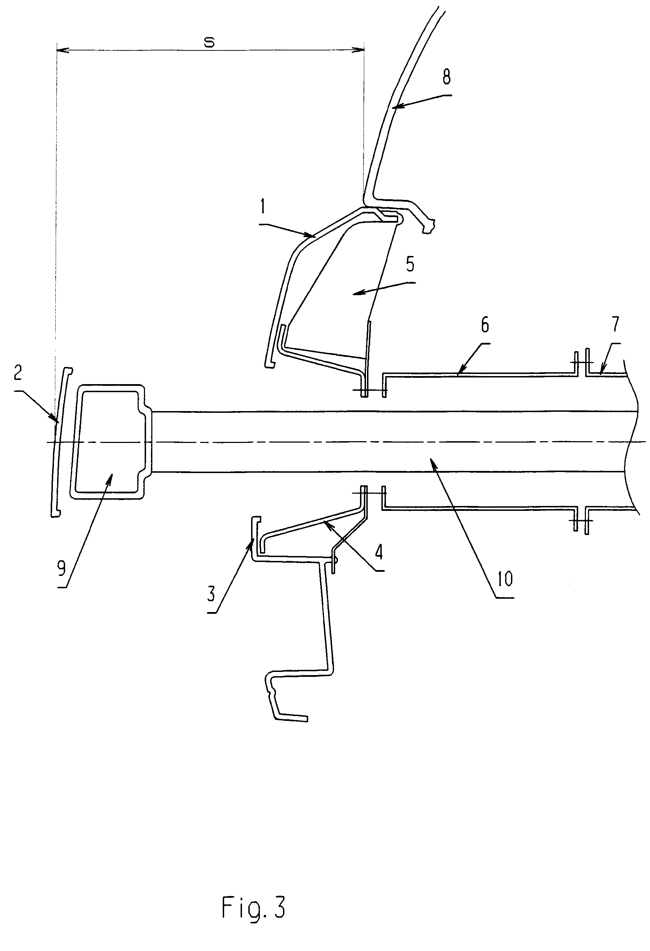

Dieser Zusammenbau der beiden Querträger 4, 9 ist in Fig. 2 dargestellt. Der zweite Querträger 9 befindet sich dabei vollständig im U-förmigen Aufnahmeraum des nach vom offenen ersten Querträgers 4. Der Querträger 9 ist im Bedarf beweglich gehalten und kann durch die Ausfahreinheit 10 zusammen mit der Schutzleiste 2 aus seiner Ruhestellung nach vorn ausgefahren werden. Diese Situation ist in Fig. 3 dargestellt. Dieses Ausfahren des zweiten Querträgers 9 geschieht in kürzester Zeit, sobald die Sensorik einen voraussichtlichen Zusammenstoß erkennt und ein entsprechendes Signal an das Bewegungselement zur Vorwärtsbewegung gibt. Gleiche Bauteile haben in Fig. 2 die gleichen Bezeichnungen erhalten wie in Fig. 1.

In Fig. 3 ist der ausgefahrene Zustand des zweiten Querträgers 9 dargestellt. Durch diesen ausgefahrenen Zustand ergibt sich für das Gesamt-Stoßfängersystem ein wesentlich längerer Verformungsweg s, über den Energie aufgenommen werden kann.

Durch diesen verlängerten Verformungsweg s können auch bei höheren Aufprallgeschwindigkeiten, d. h., beim Einwirken größerer Stoßenergien, die an das Stoßfängersystem angrenzenden Bauteile 8 vor Beschädigung geschützt werden.

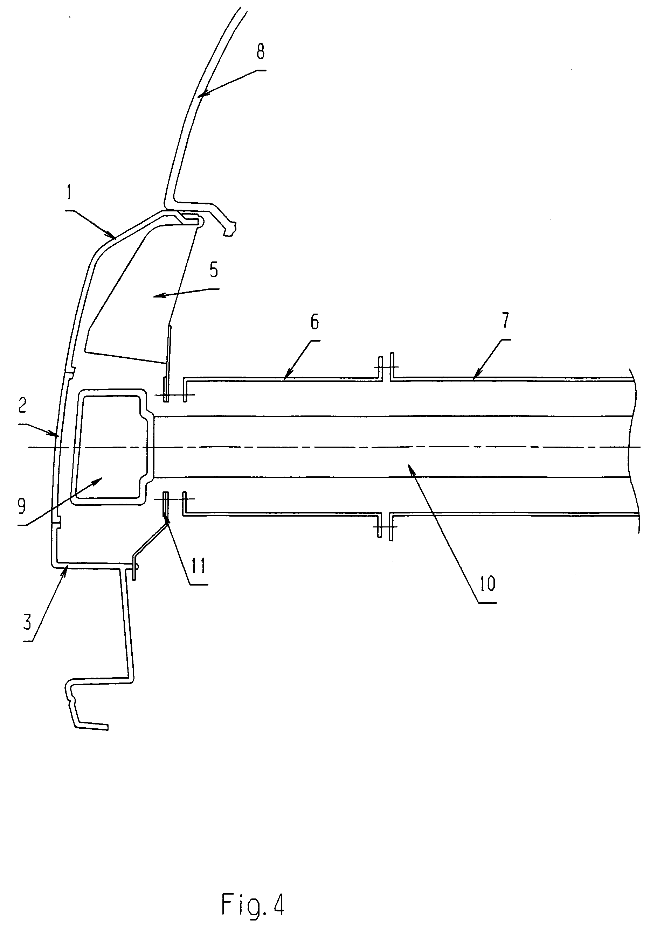

Der Grundaufbau des erfindungsgemäßen Stoßfängersystems, d. h., der nicht bewegliche Teilbereich des ersten Querträgers 4 kann erfindungsgemäß seine Funktion als Energieaufnahmeelement nahezu vollständig verlieren. Der erste Querträger 4 dient dann nur noch als Stütz- und Befestigungselement für angrenzende Bauteile und kann in seiner Raumform entsprechend reduziert werden. In Fig. 4 ist der erste Querträger 4 auf ein flaches Befestigungselement 11 reduziert, an den der Spoiler 3 und das Versteifungsteil 5 angebaut sind. Das flache Befestigungselement 11 besitzt Durchbrechungen, durch die die Ausfahreinheit 10 hindurchragt, während der zweite Querträger 9 vor diesen Durchbrechungen angeordnet ist. Der zweite Querträger 9 sowie das innere Versteifungsteil 5 sind auch hier durch die Stoßfängerabdeckung 1 dem Sichtbereich entzogen.

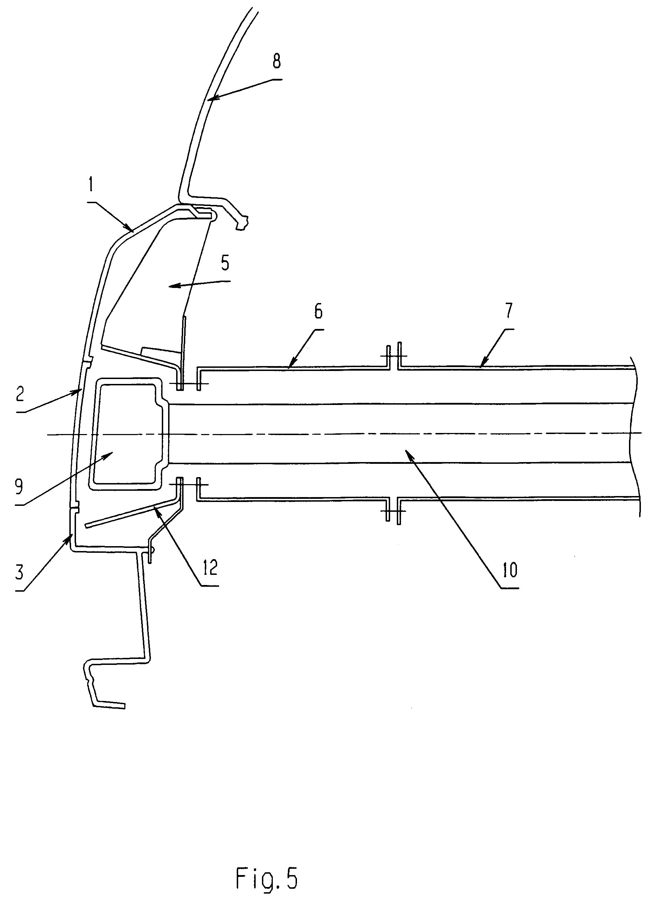

Fig. 5 zeigt schließlich noch die Reduzierung des ersten Querträgers 4 auf ein einfaches U-Profil 12, welches ebenfalls nach vorn geöffnet ist und den zweiten Querträger 9 in seinem lichten Aufnahmeraum aufnimmt. Gleiche Bauelemente haben auch hier die gleichen Bezeichnungen erhalten wie in den vorhergehenden Figurenbeschreibungen.

## Patentansprüche

1. Vorrichtung zur Energieaufnahme bei Stoßfängern von Kraftfahrzeugen, wobei hinter der Stoßfängerverkleidung ein an die freien Enden der Längsträger angeschlossener Querträger montiert ist und wobei weitere Versteifungs- oder Montageteile mit dem Querträger verbindbar sind, dadurch gekennzeichnet, daß dem ersten Querträger (4) ein zweiter Querträger (9) zugeordnet ist, welcher mit einer in den Längsträgem (7) achsial verschieblichen Ausfahreinheit (10) verbunden ist, und daß die Ausfahreinheit (10) über eine an sich bekannte Sensorik, welche ein Hindernis rechtzeitig vor einem Zusammenstoß erkennt, gesteuert ist.

2. Vorrichtung nach Anspruch 1, dadurch gekennzeichnet, daß der erste Querträger (4) ein U-förmiges, nach vom offenes Querschnittsprofil aufweist.

3. Vorrichtung nach Anspruch 1, dadurch gekennzeichnet, daß der erste Querträger (4) ein flachgestaltetes Trägerelement (11) ist.

4. Vorrichtung nach Anspruch 1, dadurch gekennzeichnet, daß der zweite Querträger (9) ein hohes Bauteil ist.

5. Vorrichtung nach Ansprüchen 1 und 4, dadurch gekennzeichnet, daß der zweite Querträger (9) bei der Aktivierung über die Ausfahreinheit (10) zugeordnete Bauteile (2) der Stoßfängerabdeckung (1) in seiner Vorwärtsbewegung mitnimmt.
